# EUROPÄISCHE PATENTANMELDUNG

(11) **EP 2 336 245 A1**
(43) Veröffentlichungstag der Anmeldung: **22.06.2011**
(21) Anmeldenummer: 09015397.4
(22) Anmeldetag: 12.12.2009
(51) Int. Cl.: C08L 69/00

(54) **Polycarbonatzusammensetzungen mit verbesserter Oberflächenhärte**

(71) Anmelder: Bayer MaterialScience AG, 51368 Leverkusen (DE)
(72) Erfinder: Heuer, Helmut-Werner, 47829 Krefeld (DE); Wehrmann, Rolf, 47800 Krefeld (DE)

(57) **Zusammenfassung**

Gegenstand der vorliegenden Erfindung sind Polycarbonatzusammensetzungen mit verbesserter Oberflächenhärte, Verfahren zu deren Herstellung und deren Verwendung zur Herstellung von Blends, Formteilen und Extrudaten.

## Beschreibung

Gegenstand der vorliegenden Erfindung sind Polycarbonatzusammensetzungen mit verbesserter Oberflächenhärte, Verfahren zu deren Herstellung und deren Verwendung zur Herstellung von Formteilen und Extrudaten.

Aromatische Polycarbonate gehören zur Gruppe der technischen Thermoplaste. Sie zeichnen sich durch die Kombination der technologisch wichtigen Eigenschaften Transparenz, Wärmeformbeständigkeit und Zähigkeit aus.

In WO 2007/008390 A2 werden Copolycarbonate beschrieben, die 1,1-Bis(3-methyl-4-hydroxyphenyl)-cyclohexan und optional 2,2-Bis(3-methyl-4-hydroxyphenyl)-propan enthalten. Es wird offenbart, dass Fenster und andere Gegenstände aus diesem Copolycarbonat eine besonders gute Kratzfestigkeit aufweisen.

In WO 2008/008 599 A2 wird die Verwendung von Polycarbonaten, die 2,2-Bis(3-methyl-4-hydroxyphenyl)-propan und / oder 1,1-Bis(3-methyl-4-hydroxyphenyl)-cyclohexan enthalten können, für die Herstellung von flammgeschützten Artikeln beschrieben, die bei einer Kratzkraft von 8 Newton eine Kratzertiefe von weniger als 20 Mikrometer aufweisen.

Diphenole enthaltend starre Ringverbrückungen im Molekül wurden in der DE 13 00 267 A beschrieben. Hierin wird auch die Herstellung von linearen Polycarbonaten aus diesen Diphenolen erwähnt. In den Beispielen werden jedoch nur Homopolycarbonate hergestellt. So wird hier beispielsweise das Diphenol 4,4'-(2-Norbornyliden)-diphenol beschrieben, welches einen gesättigten bicyclischen, verbrückten Kohlenwasserstoff-Ring enthält. In dem Dokument wird die Aufgabe gestellt, Polycarbonate mit besseren Hochtemperatureigenschaften bereitzustellen. Die beschriebenen Homopolycarbonate sollen eine bessere Wärmeformbeständigkeit (hohe Glastemperatur) und Löslichkeit in flüchtigen Lösungsmitteln besitzen. Dies wird als erfindungsgemäßer Vorteil gesehen, da hiermit Artikel wie Folien erhalten werden können, welche durch Filmziehen oder Polymerstränge durch Nass- oder Trockenverspinnen aus organischer Lösung heraus erhalten werden können. Auch in der zu der gleichen Schutzrechtsfamilie gehörenden US 3 517 071 A werden in den Beispielen nur Homopolycarbonate offenbart. Zur Erhöhung der Kratzfestigkeit oder der Oberflächenhärte von Polycarbonatzusammensetzungen, welche entsprechende Strukturelemente in einer Blendkomponente enthalten, erteilt das Patent keine Lehre zum Handeln.

Die aus dem Stand der Technik bekannten Polycarbonatzusammensetzungen sind aber für gewisse Anwendungen nicht geeignet, bei denen Temperaturbeständigkeit und Kratzfestigkeit eine übergeordnete Rolle spielen.

Es bestand daher Bedarf nach einer hochtemperaturbeständigen Polycarbonatzusammensetzung, die eine erhöhte Kratzfestigkeit aufweist bei sonst gleich gut bleibenden Eigenschaften.

Unter Polycarbonatzusammensetzungen (oder Blends) im Sinne dieser Anmeldung versteht man Mischungen aus zwei oder mehreren Polycarbonaten sowie gegebenenfalls mit Zusatzstoffen versehen.

Daher bestand die Aufgabe der vorliegenden Erfindung darin, Polycarbonatzusammensetzungen und Verfahren zu deren Herstellung zu finden, die über eine besonders hohe Oberflächenhärte verfügen, sowie Polycarbonatzusammensetzungen für Anwendungen zur Verfügung zu stellen, bei denen besondere Anforderungen an die Stabilität der Oberfläche gestellt werden, ohne dass eine zusätzliche Kratzfestschicht aufgetragen werden muss.

Überraschenderweise wurde gefunden, dass Polycarbonatzusammensetzungen mit einer Polycarbonatkomponente auf der Basis von Diphenolen, welche eine starre Ringverbrückung über eine bi- oder trizyklische aliphatische Struktureinheit oder einen mindestens dreifach substituierten Cycloalkylring im Molekül aufweisen und einer weiteren Polycarbonatkomponente, über eine noch höhere Oberflächenhärte als die bisher bekannten Copolycarbonate mit erhöhter Kratzfestigkeit verfügen.

Gegenstand der vorliegenden Erfindung sind daher Polycarbonatzusammensetzungen enthaltend:
A) 10 ― 90 Gew.-Teile, bevorzugt 20 - 80 Gew.-Teile, besonders bevorzugt 25 ― 65 Gew.-Teile (bezogen auf die Summe der Gewichtsteile der Komponenten A+B) eines Polycarbonats enthaltend eine oder mehrere Monomereinheiten abgeleitet von Verbindungen der allgemeinen Formeln (1a), (1b) und (1c), 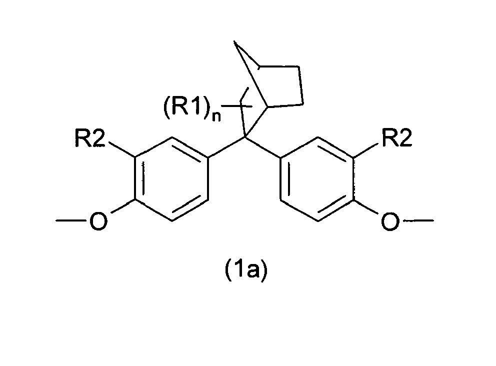 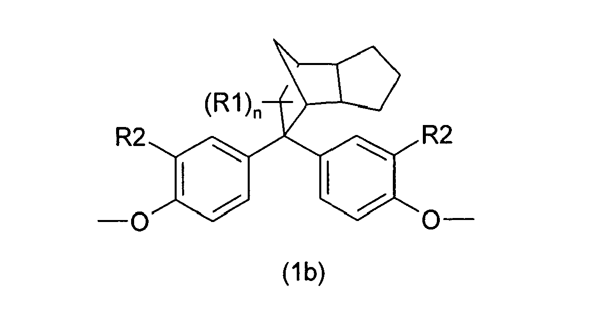 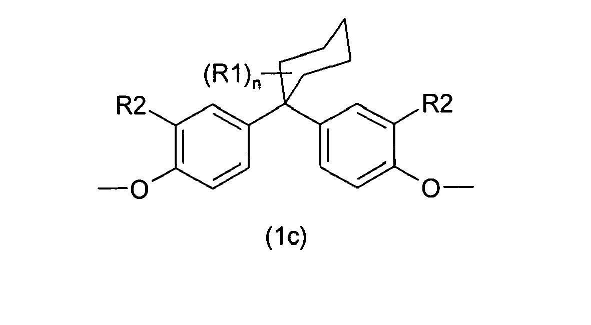 in welchen die R1 unabhängig voneinander für C₁-C₄-Alkyl, bevorzugt Methyl, Ethyl, n-Propyl, i-Propyl, t-Butyl, ganz besonders bevorzugt Methyl,
   n für 0, 1, 2 oder 3 für die Strukturen (1a) und (1b) bzw. n für 3, 4, 5 oder 6, für die Struktur (1c)
   und die R2 unabhängig voneinander für H, lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, insbesondere Methyl, Ethyl, n-Propyl, i-Propyl, t-Butyl, und ganz besonders bevorzugt für Wasserstoff oder Methyl stehen.
B) 90 ― 10 Gew.-Teile, bevorzugt 80 - 20 Gew.-Teile, besonders bevorzugt 75 ― 35 Gew.-Teile (bezogen auf die Summe der Gewichtsteile der Komponenten A+B) eines Polycarbonats enthaltend eine oder mehrere Monomereinheiten abgeleitet von Verbindungen der allgemeinen Formel (4): 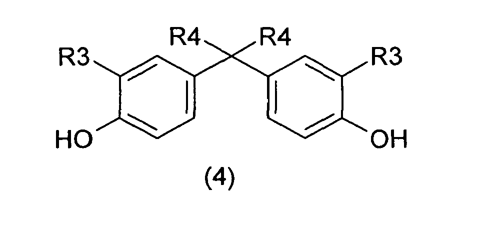 in denen R3 für H, lineare oder verzweigte C₁-C₁₀ Alkyl, bevorzugt lineare oder verzweigte
   C₁-C₆ Alkyl, besonders bevorzugt für lineare oder verzweigte C₁-C₄ Alkyl, ganz besonders bevorzugt für H oder C₁-Atkyt (Methyl) steht
   und
   in denen R4 für lineare oder verzweigte C₁-C₁₀ Alkyl, bevorzugt lineare oder verzweigte
   C₁-C₆ Alkyl, besonders bevorzugt für lineare oder verzweigte C₁-C₄ Alkyl, ganz besonders bevorzugt für C₁-Alkyl (Methyl) steht.
C) gegebenenfalls 0 bis 5 Gew.-Teile, bevorzugt 0 bis 2,5 Gew.-Teile, besonders bevorzugt 0 bis 1 Gew.-Teile (jeweils bezogen auf die Summe der Gewichtsteile der Komponenten A+B) Zusatzstoffe.

### Komponente A

Die Monomereinheit führt man über die entsprechenden Diphenole der allgemeinen Formeln (2a), (2b) und (2c) ein, in denen die R1 und R2 die unter den Formeln (1a), (1b) und (1c) genannten Bedeutungen haben.

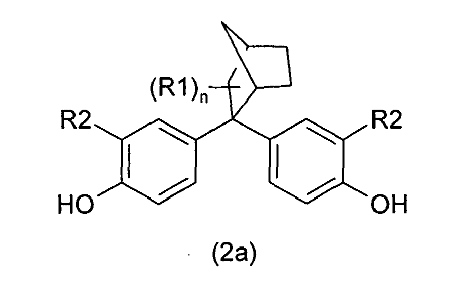

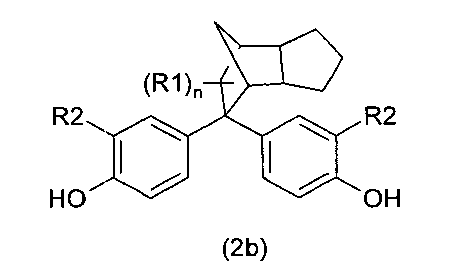

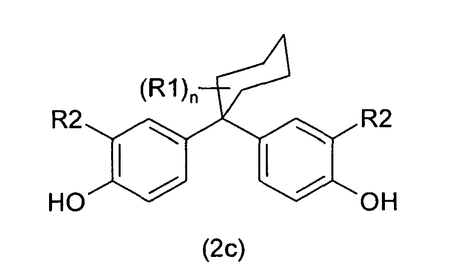

Besonders bevorzugt werden die erfindungsgemäßen Verbindungen, welche durch die allgemeinen Formeln (2d) bis (2i) beschrieben werden.

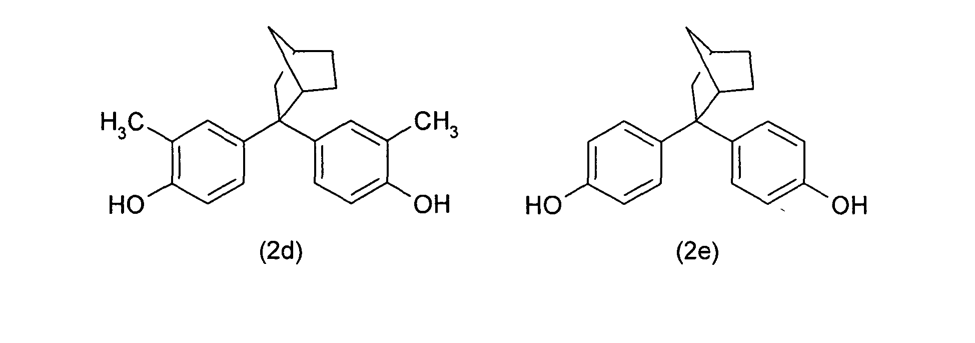

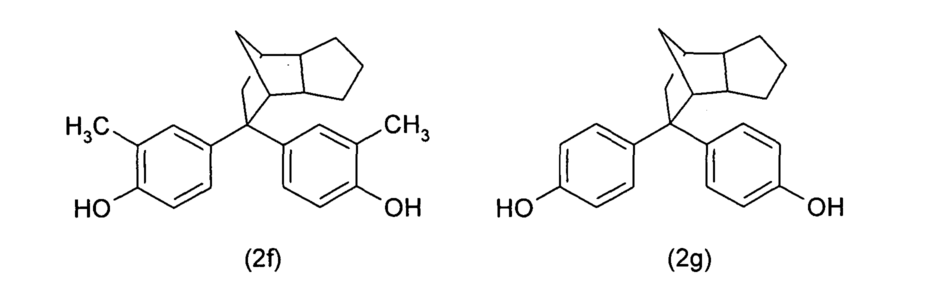

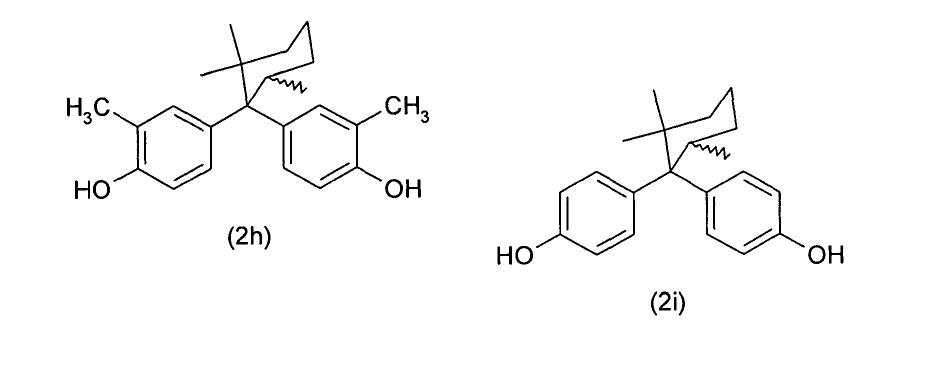

Ganz besonders bevorzugt sind die Verbindungen, die mit den Formeln (2e), (2g), (2i) beschrieben werden, wobei die Verbindung mit der Formel (2i) in Form des Bisphenols TMC insbesondere ganz besonders bevorzugt wird.

Die erfindungsgemäß einzusetzenden Diphenole der Formeln (2) und ihr Einsatz in Homopolycarbonaten sind in der Literatur teilweise bekannt. Copolycarbonate erhältlich aus diesen Diphenolen sowie deren Verwendbarkeit für Anwendungen mit geforderter, höherer Oberflächenhärte wurden jedoch bisher nicht beschrieben.

Neben einen oder mehreren Diphenolen der Formeln (2), können als weitere Monomereinheit eine oder mehrere Diphenole ausgewählt aus der Gruppe der Verbindungen der Formel (3a) enthalten sein: 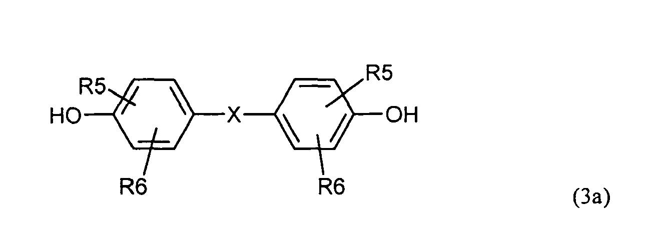 in der
- R5 und R6: unabhängig voneinander für H, C1-C18-Alkyl-, C1-C18-Alkoxy, Halogen wie Cl oder Br oder für jeweils gegebenenfalls substituiertes Aryl oder Aralkyl, bevorzugt für H oder C1-C12-Alkyl, besonders bevorzugt für H oder C1-C8-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C₅ bis C₆-Cycloalkyliden, -O-, -SO-, -CO-, -S-, -SO₂-, oder ein für einen Rest der Formel 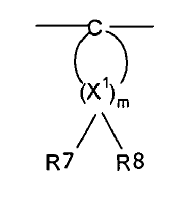 wobei
- R7 und R8: für jedes X¹ individuell wählbar, unabhängig voneinander Wasserstoff oder C₁ bis C₆-Alkyl, vorzugsweise Wasserstoff, Methyl oder Ethyl bedeuten und
- X¹: Kohlenstoff und

- m: eine ganze Zahl von 4 bis 7, bevorzugt 4 oder 5 bedeuten, mit der Maßgabe, dass an mindestens einem Atom X¹, R7 und R8 gleichzeitig Alkyl sind.

Beispielhaft werden für die Diphenole der Formel (3a), die neben den erfindungsgemäßen Diphenolen der Formel (1) eingesetzt werden können, Hydrochinon, Resorcin, Dihydroxybiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen, und auch α,ω-Bis-(hydroxyphenyl)-polysiloxane genannt.

Bevorzugte Diphenole der Formel (3a) sind beispielsweise 4,4'-Dihydroxybiphenyl (DOD), 4,4'-Dihydroxybiphenylether (DOD-Ether), 2,2-Bis-(4-hydroxyphenyl)-propan (Bisphenol A), 1,1-Bis-(4-hydroxyphenyl)3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1, 1-Bis[2-(4-hydroxyphenyl)-2-propyl]-benzol, 1,3-Bis[2-( 4-hydroxyphenyl)-2-propyl]-benzol (Bisphenol M), 2,2-Bis-(3-methyl-4-hydroxyphenyl)propan, 2,2-Bis-(3-chlor-4-hydroxyphenyl) propan, Bis-(3,5-dimethyl-4-hydroxyphenyl)methan, 2,2-Bis-(3,5-dimethyl-4-hydroxyphenyl) propan, Bis-(3,5-dimethyl-4-hydroxyphenyl)sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Diphenole sind beispielsweise 2,2-Bis-(4-hydroxyphenyl)-propan (Bisphenol A), 4,4'-Dihydroxybiphenyl (DOD), 4,4'-Dihydroxybiphenylether (DOD-Ether), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Ganz besonders bevorzugt sind Verbindungen der allgemeinen Formel (3b), 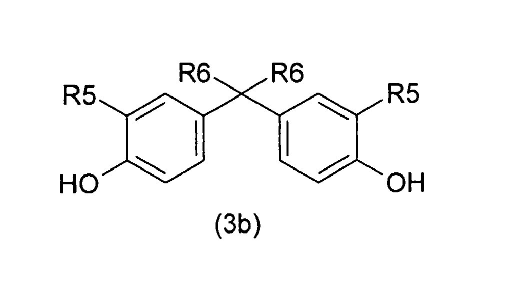 in denen R5 für H, lineare oder verzweigte C₁-C₁₀ Alkyl, bevorzugt lineare oder verzweigte C₁-C₆
Alkyl, besonders bevorzugt für lineare oder verzweigte C₁-C₄ Alkyl, ganz besonders bevorzugt für H oder C₁-Alkyl (Methyl) steht und
in denen R6 für lineare oder verzweigte C₁-C₁₀ Alkyl, bevorzugt lineare oder verzweigte C₁-C₆
Alkyl, besonders bevorzugt für lineare oder verzweigte C₁-C₄ Alkyl, ganz besonders bevorzugt für C₁-Alkyl (Methyl) steht.

Hierbei sind insbesondere die Diphenole (3c) und (3d) ganz besonders bevorzugt.

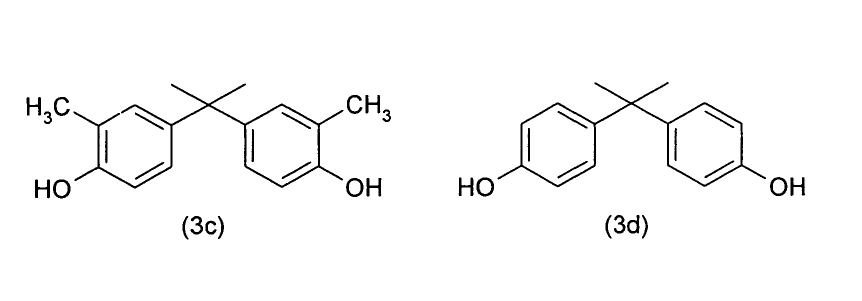

Die Diphenole der allgemeinen Formeln (3) können sowohl allein als auch im Gemisch miteinander verwendet werden. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Der Anteil der erfindungsgemäßen Diphenole im Copolycarbonat beträgt 0,1-88 mol-%, bevorzugt 1 - 86 mol-%, besonders bevorzugt 5 - 84 mol-% und ganz besonders bevorzugt 10 - 82 mol% (bezogen auf die Summe der Mole eingesetzter Diphenole).

Die bevorzugten Diphenolateinheiten der erfindungsgemäßen Copolycarbonate leiten sich von Monomeren mit den allgemeinen Strukturen der oben beschriebenen Formeln (2) und (3) ab.

Die Copolycarbonatkomponente der Polycarbonatzusammensetzungen kann als block- und statistisches Copolycarbonat vorliegen. Besonders bevorzugt sind statistische Copolycarbonate, die Diphenolat-Einheiten enthalten, die sich aus Diphenolen der folgenden Formeln ableiten:

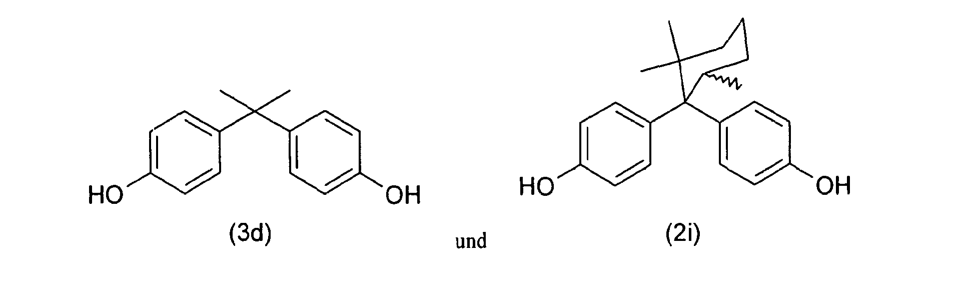

Dabei ergibt sich das Verhältnis der Häufigkeit der Diphenolat-Monomereinheiten im Copolycarbonat aus dem Molverhältnis der eingesetzten Diphenole.

### Komponente B

Komponente B der Polycarbonatzusammensetzungen leitet sich von folgenden Diphenoleinheiten ab: 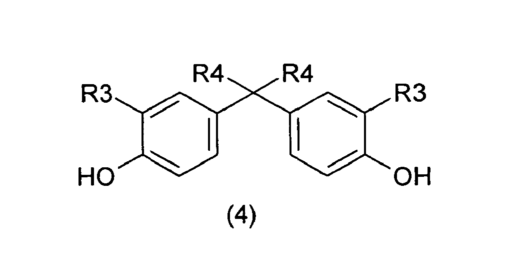 in denen R3 für H, lineare oder verzweigte C₁-C₁₀ Alkyl, bevorzugt lineare oder verzweigte C₁-C₆
Alkyl, besonders bevorzugt für lineare oder verzweigte C₁-C₄ Alkyl, ganz besonders bevorzugt für H oder C₁-Alkyl (Methyl) steht und
in denen R4 für lineare oder verzweigte C₁-C₁₀ Alkyl, bevorzugt lineare oder verzweigte C₁-C₆
Alkyl, besonders bevorzugt für lineare oder verzweigte C₁-C₄ Alkyl, ganz besonders bevorzugt für C₁-Alkyl (Methyl) steht.

Ganz besonders bevorzugt stellt die Komponente B der Polycarbonatzusammensetzungen ein Homopolycarbonat aus dem Diphenol (5) dar.

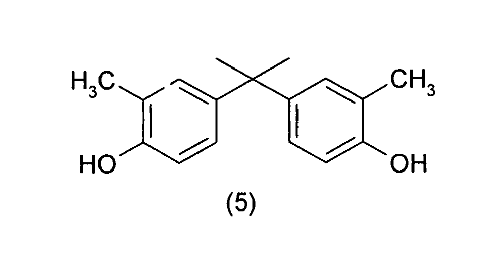

Neben einen oder mehreren Diphenolen der Formeln (4), können als weitere Monomereinheit eine oder mehrere Diphenole ausgewählt aus der Gruppe der Verbindungen der Formel (3a) enthalten sein, wie sie bereits für Komponente A beschrieben sind.

Die Polycarbonate bzw. Copolycarbonate können auch verzweigt sein. Hierzu werden bestimmte geringe Mengen, vorzugsweise Mengen zwischen 0.05 und 5 Mol-%, besonders bevorzugt 0,1-3 Mol-%, ganz besonders bevorzugt 0,1-2 Mol-%, bezogen auf die Mole eingesetzter Diphenole, an trifunktionellen Verbindungen wie z.B. Isatinbiskresol (IBK) oder Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan (THPE); Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α, α'α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere; 1,1,1-Tri-(4-hydroxyphenyl)-ethan (THPE) und Bis-(3-methyl-4-hydroxyphenyl)-2-oxo-2,3-dihydroindol als sogenannte Verzweiger, eingesetzt. Bevorzugt werden Isatinbiskresol sowie 1,1,1-Tri-(4-hydroxyphenyl)-ethan (THPE) und Bis-(3-methyl-4-hydroxyphenyl)-2-oxo-2,3-dihydroindol als Verzweiger eingesetzt.

Durch den Einsatz dieser Verzweiger ergeben sich verzweigte Strukturen. Die resultierende Langkettenverzweigung führt meist zu rheologischen Eigenschaften der erhaltenen Polycarbonate, die sich in einer Strukturviskosität im Vergleich zu linearen Typen äußert.

Zur Gewinnung hochmolekularer Polycarbonate nach dem Phasengrenzflächenverfahren werden im Zweiphasengemisch die Alkalisalze von Diphenolen mit Phosgen umgesetzt. Das Molekulargewicht kann durch die Menge an Monophenolen die als Kettenabbrecher wirken wie z. B. Phenol, tert.-Butylphenol oder Cumylphenol gesteuert werden, besonders bevorzugt Phenol, tert.-Butylphenol. Bei diesen Umsetzungen entstehen praktisch ausschließlich lineare Polymere. Dies kann durch Endgruppenanalyse nachgewiesen werden. Durch gezielte Verwendung von sogenannten Verzweigern, in der Regel mehrfach hydroxylierte Verbindungen, werden dabei auch verzweigte Polycarbonate erhalten.

Die vorliegende Erfindung betrifft weiterhin ein Verfahren zur Herstellung der erfindungsgemäßen Polycarbonatkomponenten des Blends enthaltend Diphenolateinheiten abgeleitet von Diphenolen der Formeln (2) und (3), dadurch gekennzeichnet, dass die Diphenole und evtl. Verzweiger in wässriger alkalischer Lösung gelöst werden und mit einer gegebenenfalls in einem Lösemittel gelösten Carbonatquelle wie Phosgen in einem Zweiphasengemisch aus einer wässrigen alkalischen Lösung, einem organischen Lösemittel und einem Katalysator, bevorzugt einer Aminverbindung, zur Reaktion gebracht werden. Die Reaktionsführung kann auch mehrstufig erfolgen.

Solche Verfahren zur Herstellung von Polycarbonat sind als Zweiphasengrenzflächenverfahren grundsätzlich z.B. aus H. Schnell, Chemistry and Physics of Polycarbonates, Polymer Reviews, Vol. 9, Interscience Publishers, New York 1964 S. 33 ff. und auf Polymer Reviews, Vol. 10, "Condensation Polymers by Interfacial and Solution Methods", Paul W. Morgan, Interscience Publishers, New York 1965, Kap. VIII, S. 325 bekannt und die grundlegenden Bedingungen daher dem Fachmann geläufig.

Die Konzentration der Diphenole in der wässrigen alkalischen Lösung beträgt dabei 2 bis 25 Gew. %, bevorzugt 2 bis 20 Gew. % besonders bevorzugt 2 bis 18 Gew. % und ganz besonders bevorzugt 3 bis 15 Gew. %. Die wässrige alkalische Lösung besteht aus Wasser, in dem Hydroxide von Alkali- oder Erdalkalimetallen gelöst sind. Bevorzugt sind Natrium- und Kaliumhydroxide.

Bei der Verwendung von Phosgen als Carbonatquelle beträgt das Volumenverhältnis wässrige alkalische Lösung zu organischem Lösemittel 5:95 bis 95:5 bevorzugt 20:80 bis 80:20, besonders bevorzugt 30:70 bis 70:30 und ganz besonders bevorzugt 40:60 bis 60:40. Das Molverhältnis Diphenol zu Phosgen ist kleiner als 1:10, bevorzugt kleiner als 1:6, besonders bevorzugt kleiner als 1:4 und ganz besonders bevorzugt kleiner als 1:3. Die Konzentration der erfindungsgemäßen verzweigten Polycarbonate und Copolycarbonate in der organischen Phase beträgt 1,0 bis 25 Gew. % bevorzugt 2 bis 20 Gew. %, besonders bevorzugt 2 bis 18 Gew. % und ganz besonders bevorzugt 3 bis 15 Gew. %.

Die Konzentration der Aminverbindung beträgt bezogen auf die eingesetzte Diphenolmenge 0,1 bis 10 mol % bevorzugt 0,2 bis 8 mol % besonders bevorzugt 0,3 bis 6 mol % und ganz besonders bevorzugt 0,4 bis 5 mol %.

Unter Diphenolen sind Diphenolmischungen, ausgewählt aus den oben genannten Verbindungen, mit Anteilen der oben genannten Verzweiger, zu verstehen. Bei der Carbonatquelle handelt es sich um Phosgen, Diphosgen oder Triphosgen, bevorzugt um Phosgen. Für den Fall, dass Phosgen eingesetzt wird, kann ggf. auf ein Lösemittel verzichtet und das Phosgen direkt in das Reaktionsgemisch eingeleitet werden.

Als Katalysator können tertiäre Amine wie Triethylamin oder N-Alkylpiperidine eingesetzt werden. Als Katalysatoren geeignet sind Trialkylamine und 4-(Dimethylamino)-pyridin. Besonders geeignet sind Triethylamin, Tripropylamin, Triisopropylamin, Tributylamin, Triisobutylamin, N-Methylpiperidin, N-Ethylpiperidin, und N-Propylpiperidin.

Als organisches Lösemittel kommen halogenierte Kohlenwasserstoffe wie Methylenchlorid, Chlorbenzol, Dichlorbenzol, Trichlorbenzol oder Gemische davon oder aromatische Kohlenwasserstoffe, wie z.B. Toluol oder Xylole, in Frage. Die Reaktionstemperatur kann ―5°C bis 100 °C, bevorzugt 0 °C bis 80 °C, besonders bevorzugt 10 °C bis 70 °C und ganz besonders bevorzugt 10 °C bis 60 °C betragen.

Möglich ist auch die Herstellung der Polycarbonate nach dem Schmelzumesterungsverfahren, bei dem die Diphenole mit Diarylcarbonaten, meist Diphenylcarbonat, in Anwesenheit von Katalysatoren, wie Alkalisalzen, Ammonium- oder Phosphoniumverbindungen, in der Schmelze umgesetzt werden.

Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Beim Schmelzumesterungsverfahren werden die bereits beim Phasengrenzflächenverfahren beschriebenen aromatischen Dihydroxyverbindungen, mit Kohlensäurediestern unter Zuhilfenahme von geeigneten Katalysatoren und gegebenenfalls weiteren Zusatzstoffen in der Schmelze umgeestert.

Kohlensäurediester im Sinne der Erfindung sind solche der Formel (6) und (7) 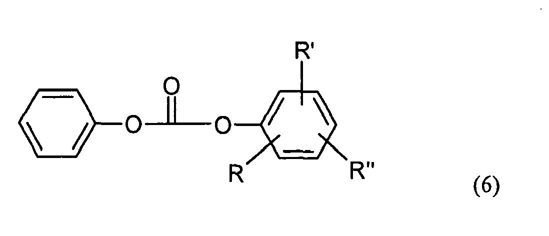 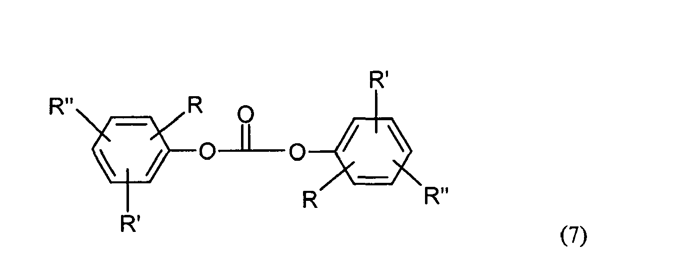 wobei
R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
beispielsweise
Diphenylcarbonat, Butylphenyl-phenylcarbonat, Di-Butylphenylcarbonat, Isobutylphenylphenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenylphenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)carbonat, Cumylphenylphenylcarbonat, Di-Cumylphenylcarbonat, Naphthylphenylphenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, 4-Phenoxyphenyl-phenylcarbonat, Di-(4-Phenoxyphenyl)carbonat, 3-Pentadecylphenylphenylcarbonat, Di-(3-Pentadecylphenyl)carbonat Tritylphenyl-phenylcarbonat, Di-Tritylphenylcarbonat,

bevorzugt Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat, besonders bevorzugt Diphenylcarbonat.

Es können auch Mischungen der genannten Kohlensäurediester eingesetzt werden.

Der Anteil an Kohlensäureester beträgt 100 bis 130 mol-%, bevorzugt 103 bis 120 mol-%, besonders bevorzugt 103 bis 109 mol-%, bezogen auf die Dihydroxyverbindung.
Als Katalysatoren im Sinne der Erfindung werden im Schmelzumesterungsverfahren wie in der genannten Literatur beschrieben basische Katalysatoren wie beispielsweise Alkali- und Erdalkalihydroxide und ―oxide aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der folgenden allgemeinen Formel (8) 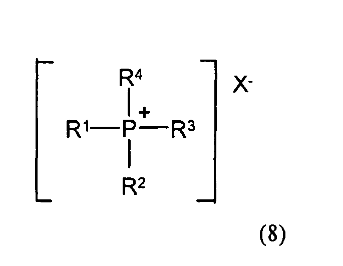 wobei
- R¹⁻⁴: dieselben oder verschiedene C₁-C₁₀Alkyle, C₆-C₁₀-Aryle, C₇-C₁₀-Aralkyle oder C₅-C₆-Cycloalkyle sein können, bevorzugt Methyl oder C₆-C₁₄Aryle, besonders bevorzugt Methyl oder Phenyl, und
- X⁻: ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann. Bevorzugte Katalysatoren sind

Tetraphenylphosphoniumchlorid, Tetraphenylphosphoniumhydroxid, Tetraphenylphosphoniumphenolat, besonders bevorzugt Tetraphenylphosphoniumphenolat.

Die Katalysatoren werden bevorzugt in Mengen von 10⁻⁸ bis 10⁻³ mol, bezogen auf ein mol Diphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Umesterungsreaktion der aromatischen Dihydroxyverbindung und des Kohlensäurediester in der Schmelze wird bevorzugt in zwei Stufen durchgeführt. In der ersten Stufe findet das Aufschmelzen der aromatischen Dihydroxyverbindung und des Kohlensäurediester bei Temperaturen von 80 - 250°C, bevorzugt 100 - 230°C, besonders bevorzugt 120 - 190°C unter normalem Druck in 0 - 5 Stunden, bevorzugt 0,25 - 3 Stunden statt. Nach Zugabe des Katalysators wird durch Anlegen von Vakuum (bis zu 2 mm Hg) und Erhöhung der Temperatur (auf bis zu 260°C) durch Abdestillieren des Monophenols das Oligocarbonat aus der aromatischen Dihydroxyverbindung und dem Kohlensäurediester hergestellt. Hierbei fällt die Hauptmenge an Brüden aus dem Prozess an. Das so hergestellte Oligocarbonat hat eine mittlere Gewichtsmolmasse M_{w} (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol bevorzugt von 4 000 g/mol bis 15 000 g/mol.

In der zweiten Stufe wird bei der Polykondensation durch weiteres Erhöhen der Temperatur auf 250 - 320°C, bevorzugt 270 - 295°C und einem Druck von <2 mm Hg das Polycarbonat hergestellt. Hierbei wird der Rest an Brüden aus dem Prozess entfernt.

Die Katalysatoren können auch in Kombination (zwei oder mehrere) miteinander eingesetzt werden.

Beim Einsatz von Alkali-/ Erdalkalimetallkatalysatoren kann es vorteilhaft sein, die Alkali-/ Erdalkalimetallkatalysatoren zu einem späteren Zeitpunkt (z. B. nach der Oligocarbonatsynthese bei der Polykondensation in der zweiten Stufe) zuzusetzen.

Die Reaktion der aromatischen Dihydroxyverbindung und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Analog des Phasengrenzflächenverfahrens können durch Einsatz mehrfunktioneller Verbindungen verzweigte Poly- oder Copolycarbonate hergestellt werden.

Die relative Lösungsviskosität der erfindungsgemäßen Copolycarbonate, bestimmt nach DIN 51562, liegt bevorzugt im Bereich von = 1.15 ― 1.35.

### Komponente C

Den erfindungsgemäßen Zusammensetzungen können noch die für diese Thermoplasten üblichen Zusatzstoffe wie Füllstoffe, UV-Stabilisatoren, IR-Stabilisatoren, Thermostabilisatoren, Antistatika und Pigmente, Farbmittel in den üblichen Mengen zugesetzt werden; gegebenenfalls können das Entfonnungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15 ― 25, und in "Plastics Additives", R. Gächter und H. Müller, Hanser Publishers 1983, beschrieben).

Die den erfindungsgemäßen Zusammensetzungen gegebenenfalls zugesetzten Entformungsmiritel sind bevorzugt ausgewählt aus der Gruppe, die Pentaerythrittetrastearat, Glycerinmonostearat, langkettige Fettsäureester, wie beispielsweise Stearylstearat und Propoandiolstearat sowie deren Mischungen umfaßt. Die Entformungsmittel werden eingesetzt in Mengen von 0,05 Gew.-% bis 2,00 Gew.-% bezogen auf die Formmasse, bevorzugt in Mengen von 0,1 Gew.-% bis 1,0 Gew.-%, besonders bevorzugt in Mengen von 0,15 Gew.-% bis 0,60 Gew.-% und ganz besonders bevorzugt in Mengen von 0,2 Gew.-% bis 0,5 Gew.-% bezogen auf die Formmasse.

Geeignete Zusatzstoffe sind beispielsweise beschrieben in "Additives for Plastics Handbook, John Murphy, Elsevier, Oxford 1999", im "Plastics Additives Handbook, Hans Zweifel, Hanser, München 2001 ".

Geeignete Antioxidantien bzw. Thermostabilisatoren sind beispielsweise:
Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl)-propionsäure, Ester von β-(5-tert-Butyl-4-hydroxy-3-methy)phenyl)-propionsäure, Ester von β-(3,5-Dicyclohexyl-4-hydroxyphenyl)-propionsäure, Ester von 3,5-Di-tert-butyl-4-hydroxyphenylessigsäure, Amide of β -(3,5-Di-tert-butyl-4-hydroxyphenyl)-propionsäure, geeignete Thiosynergisten, sekundäre Antioxidantien, Phosphite und Phosphonite, Benzofuranone und Indolinone.

Bevorzugt sind organische Phosphine (z.B. Triphenylphosphin), Phosphite, Phosphonate und Phosphate (z.B. Triisooctylphosphat, TOF), meist solche bei denen die organischen Reste völlig oder teilweise aus gegebenenfalls substituierten aromatischen Resten bestehen.

Als Komplexierungsmittel für Schwermetalle und zur Neutralisation von Alkalispuren sind o/m Phosphorsäuren, ganz oder teilweise veresterte Phosphate oder Phosphite geeignet.

Als Lichtschutzmittel (UV-Absorber) sind geeignet 2-(2'-Hydroxyphenyl)-benzotriazole, 2-Hydroxybenzophenone, Ester von substituierten und unsubstituierten Benzoesäuren, Acrylate, Sterisch gehinderte Amine, Oxamide sowie 2-(Hydroxyphenyl)-1,3,5-triazine bzw substituierte Hydroxyalkoxyphenyl, 1,3,5-triazole , bevorzugt sind substituierte Benzotriazole wie z.B. 2-(2'-hydroxy-5'-methyl-phenyl)-benzotriazole, 2-(2'-hydroxy-3',5'-di-t-butyl-phenyl)-benzotriazole, 2-(2'-hydroxy-3'-tert.-butyl-5'-methyl-phenyl)-5-chlorobenzotriazole, 2-(2'-hydroxy-3',5'-tert.-butylphenyl)-5-chlorobenzotriazole, 2-(2'-hydroxy-5'-tert.-octylphenyl)-benzotriazole, 2-(2'-hydroxy-3',5'-di-tert.-amylphenyl)-benzotriazole, 2-[2'-hydroxy-3'-(3",4",5",6"-tetrahydrophthalimido-ethyl)-5'-methylphenyl]-benzotriazole and 2,2'-methylenebis [4-(1,1,3,3-tetramethylbutyl)-6-(2H-benzotriazole-2-yl)-phenol].

Als UV-Stabilisatoren sind weiterhin geeignet ausgewählt aus der Gruppe, die Benzotriazole (z. B. Tinuvine der Fa. Ciba), Triazine CGX-06 der Fa. Ciba), Benzophenone (Uvinule der Fa. BASF), Cyanacrylate (Uvinule der Fa. BASF), Zimtsäureester und Oxalanilide sowie Mischungen dieser UV-Stabilisatoren umfaßt.

Beispiele für geeignete UV-Absorber sind:
a) Malonester der Formel (I): 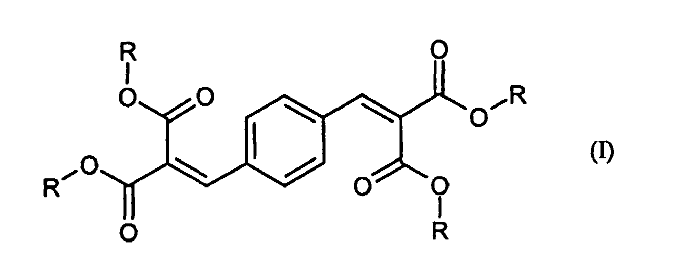 Worin R Alkyl bedeutet. Bevorzugt steht R für C1-C6-Alkyl, insbesondere für C1-C4-Alkyl und besonders bevorzugt für Ethyl.
b) Benzotriazol-Derivate nach Formel (II): 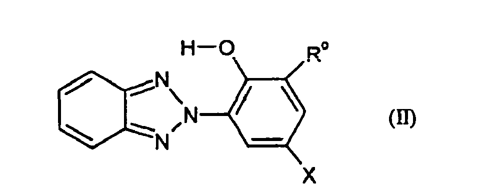 In Formel (II) sind R° enthaltend und X gleich oder verschieden und bedeuten H oder Alkyl oder Alkylaryl. Bevorzugt sind dabei Tinuvin® 329 mit X = 1,1,3,3-Tetramethylbutyl und R° = H, Tinuvin® 350 mit X = tert-Butyl und R0 = 2-Butyl und Tinuvin® 234 mit X und R° = 1,1-Dimethyl-1-phenyl
c) Dimere Benzotriazol-Derivate nach Formel (III): 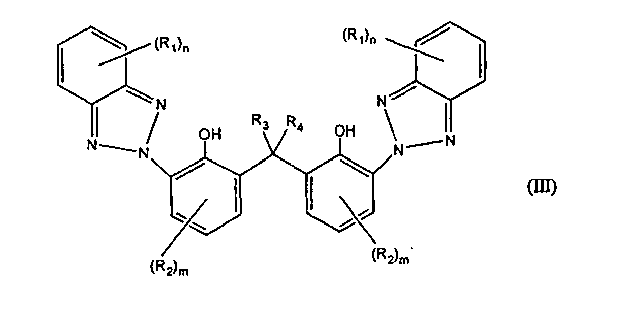 In Formel (III) sind R1 und R2 gleich oder verschieden und bedeuten H, Halogen, C1- C10-Alkyl, C5- C10-Cycloalkyl, C7-C13 -Aralkyl, C6-C14 -Aryl, -OR5 oder -(CO)-O-R 5 mit R5 = H oder C1-C4-Alkyl.
   In Formel (III) sind R3 und R4 ebenfalls gleich oder verschieden und bedeuten H, C1-C 4-Alkyl, C5- C6 -Cycloalkyl, Benzyl oder C6-C14-Aryl.
   In Formel (III) bedeuten m 1,2 oder 3 und n 1,2,3 oder 4.
   Bevorzugt ist dabei Tinuvin® 360 mit R1 = R3 = R4 = H; n = 4; R2 = 1,1,3,3-Tetramethylbutyl; m =1
d) Dimere Benzotriazol-Derivate nach Formel (IV): 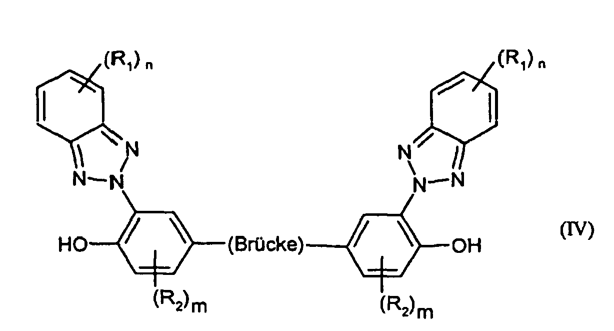 worin die Brücke 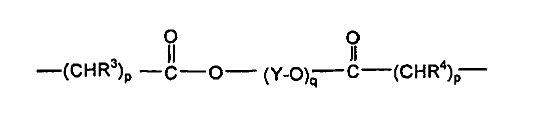 bedeutet, R , R , m und n die für Formel (III) genannte Bedeutung haben, und worin p eine ganze Zahl von O bis 3 ist, q eine ganze Zahl von 1 bis 10 ist, Y gleich -CH2-CH2-, -(CH2)3-, -(CH2)4-, -(CH2)5-, -(CH2)6-, oder CH(CH3)-CH2-ist und R3 und R4 die für Formel (III) genannte Bedeutung haben.
   Bevorzugt ist dabei Tinuvin® 840 mit R1 = H; n = 4; R2 = tert-Butyl; m = 1; R2 ist in ortho-Stellung zur OH-Gruppe angebracht; R3 = R4 = H; p = 2; Y = -(CH2)5-; q = 1
e) Triazin-Derivate nach Formel (V): 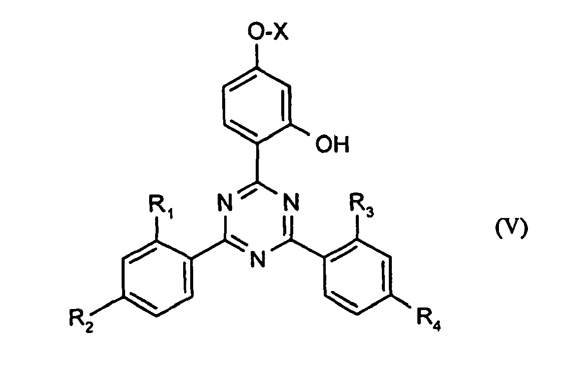 worin R1, R2, R3, R4 gleich oder verschieden sind und H, Alkyl, Aryl, CN oder Halogen sind und X gleich Alkyl, vorzugsweise iso-Octyl, ist.
   Bevorzugt ist dabei Tinuvin® 1577 mit R1 = R2 = R3 = R4 = H; X = Hexyl sowie Cyasorb® UV-1 164 mit R1 = R2 = R3 = R4 = Methyl; X Octyl
f) Triazin-Derivate der folgenden Formel (Va): 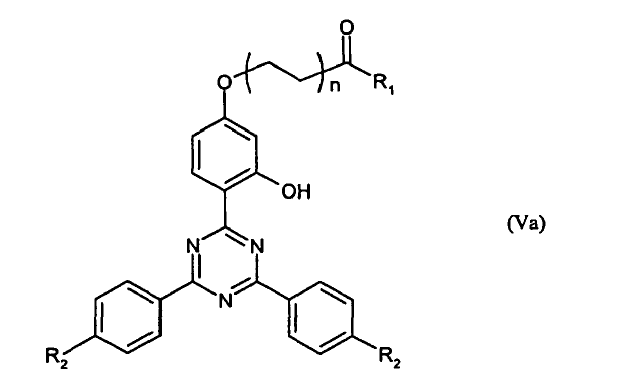 worin R1 gleich C1 Alkyl bis C17-Alkyl bedeutet, R2 gleich H oder C1-Alkyl bis C4-Alkyl bedeutet und n gleich 0 bis 20 ist.
g) Dimere Triazin-Derivate der Formel (VI): 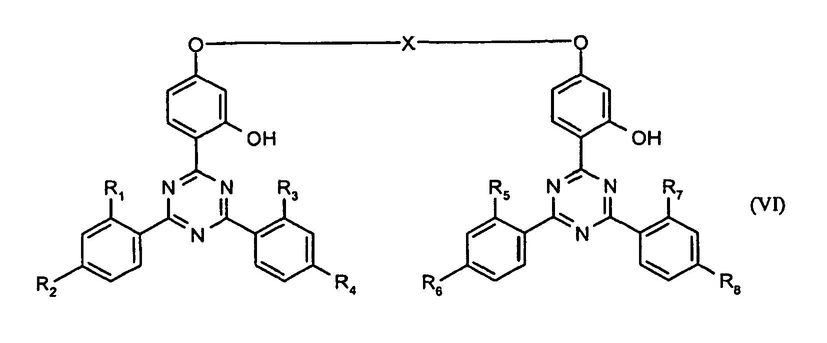 worin R1, R2, R3, R4, R5, R6, R7, R8 gleich oder verschieden sein können und H, Alkyl, CN oder Halogen bedeuten und X gleich Alkyliden, vorzugsweise Methyliden oder -(CH2 CH2-O-)n-C(=O)- ist und n für 1 bis 10, vorzugsweise 1 bis 5, insbesondere 1 bis 3.
h) Diarylcyanoacrylate der Formel (VII): 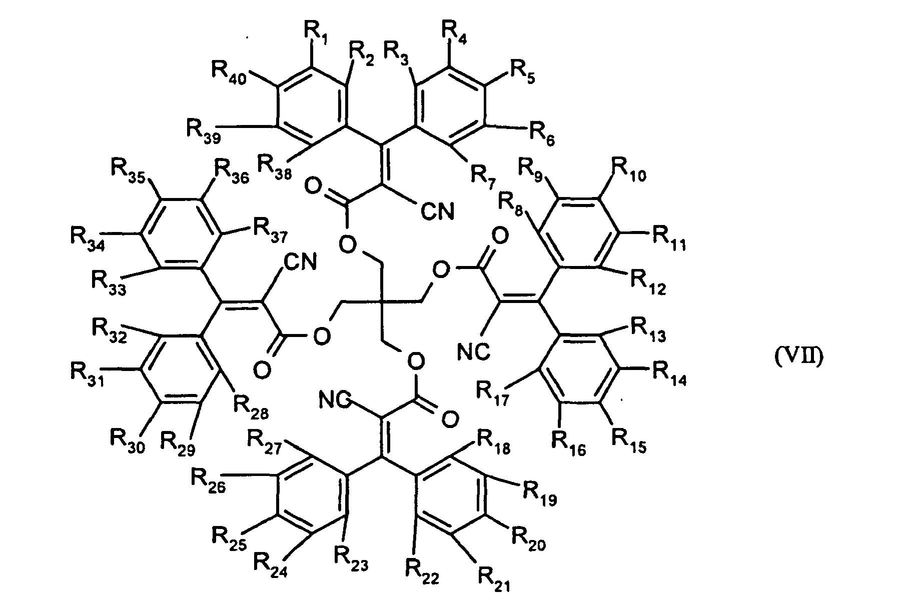 worin R bis R40 gleich oder verschieden sein können und H, Alkyl, CN oder Halogen bedeuten. Bevorzugt ist dabei Uvinul® 3030 mit R1 bis R40 = H.

Besonders bevorzugte UV-Stabilisatoren für die erfindungsgemäßen Formmassen sind Verbindungen aus der Gruppe, die aus den Benzotriazolen (b) und dimeren Benzotriazolen (c und d), den Malonestern (a) und den Cyanacrylaten (h) sowie Mischungen dieser Verbindungen besteht.

Die UV-Stabilisatoren werden eingesetzt in Mengen von 0,01 Gew.-% bis 15,00 Gew.-% bezogen auf die Formmasse, bevorzugt in Mengen von 0,05 Gew.-% bis 1,00 Gew.-%, besonders bevorzugt in Mengen von 0,08 Gew.-% bis 0,5 Gew.-% und ganz besonders bevorzugt in Mengen von 0,1 Gew.-% bis 0,4 Gew.-% bezogen auf die Gesamtzusammensetzung.

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Geeignete flammhemmende Zusatzstoffe sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen Füllstoffen zugesetzt werden.

Bevorzugt, besonders bevorzugt oder ganz besonders bevorzugt sind Ausführungsformen, welche von den unter bevorzugt, besonders bevorzugt oder ganz besonders bevorzugt bzw., vorzugsweise etc. genannten Parametern, Verbindungen, Definitionen und Erläuterungen Gebrauch machen.

Die in der Beschreibung aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Die erfindungsgemäßen Polycarbonatzusammensetzungen werden bevorzugt durch Compoundierung, beispielsweise mittels eines Mehrwellenextruders, hergestellt.

Die erfindungsgemäßen thermoplastischen Formmassen werden hergestellt, indem man die jeweiligen Bestandteile in bekannter Weise vermischt und bei Temperaturen von 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Die erfindungsgemäßen Polycarbonatzusammensetzungen, gegebenenfalls in Abmischung mit anderen Thermoplasten und/oder üblichen Zusatzstoffen, können zu beliebigen Formkörpern/Extrudaten verarbeitet überall dort eingesetzt werden, wo bereits bekannte Polycarbonate, Polyestercarbonate und Polyester eingesetzt werden. Aufgrund ihres Eigenschaftsprofils eignen sie sich insbesondere als Materialien für den Spritzguß von größeren Formteilen, beispielsweise Autoscheiben. Durch die geringe Wasseraufnahme und der damit verbundenen verbesserten Dimensionsstabilität eignen sich aber auch besonders als Substratmaterialien für optische Datenspeicher wie z.B. CD, CD-R, DVD, DVD-R, Blu-ray Disc oder Advanced Optical Disc (AOD), sind aber auch beispielsweise als Folien im Elektrosektor als Formteile im Fahrzeugbau und als Platten für Abdeckungen im Sicherheitsbereich einsetzbar. Weitere mögliche Anwendungen der erfindungsgemäßen Polycarbonate sind:
1. Sicherheitsscheiben, die bekanntlich in vielen Bereichen von Gebäuden, Fahrzeugen und Flugzeugen erforderlich sind, sowie als Schilde von Helmen.
2. Herstellung von Folien und Folienlaminate.
3. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
4. Herstellung optischer Datenspeicher.
5. Zur Herstellung von Ampelgehäusen oder Verkehrsschildern.
6. Als transluzente Kunststoffe mit einem Gehalt an Glasfasern für lichttechnische Zwecke (siehe beispielsweise DE-A 1 554 020).
7. Als transluzente Kunststoffe mit einem Gehalt an Bariumsulfat, Titandioxid und oder Zirkoniumoxid bzw. organischen polymeren Acrylatkautschuken (EP-A 634 445, EP-A 269324) zur Herstellung von lichtdurchlässigen und lichtstreuenden Formteilen.
8. Zur Herstellung von Präzisionsspritzgußteilen, wie beispielsweise Linsen, Linsenhalterungen, Kollimatoren, Lichtleitelementen und LED-Anwendungen.
9. Zur Herstellung optischer Geräteteile, insbesondere Foto- und Filmkameragehäuse (siehe beispielsweise DE-A 2 701 173).
10. Als Elektroisolierstoffe für elektrische Leiter und für Steckergehäuse sowie Steckverbinder.
11. Herstellung von Mobiltelefongehäusen
12. Network interface devices
13. Zur Herstellung von Leuchten, z.B. Scheinwerferlampen, als sogenannte "head-lamps", Streulichtscheiben oder innere Linsen, sowie Langfeldleuchten.
14. Für Lebensmittelanwendungen, wie z. B. Flaschen, Geschirr und Schokoladenformen.
15. Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.
16. Für Gehäuse, wie z. B. Elektroverteilerschränke.
17. Gehäuse für elektrische Geräte
18. Transparente Waschmaschinen ― Bullaugen mit verbesserter Kratzbeständigkeit
19. Schutzbrillen, Visiere oder optische Korrekturbrillen.
20. Lampenabdeckungen für Kücheneinrichtungen mit verbesserter Kratzbeständigkeit
21. Schutzhelme mit verbesserter Kratzbeständigkeit
22. Für medizinische Anwendungen, Medical Devices, z.B. Oxygenatoren, Dialysatoren (Hohlfaserdialysatoren), 3-Wege-Hähne, Schlauchverbinder, Blutfilter, Injektionssysteme, Inhalatoren, Ampullen
23. Folien beispielsweise für den Einsatz in Blutzuckermessgeräten

Besonders bevorzugte Anwendungen sind "Soft keys" bei Elektro-/elektronischen (E/E)-Anwendungen, Linsen (z.B. Infrarotlinsen), LEDs, Bildschirm-/Display-Abdeckungen und Folien. Insbesondere bevorzugt ist der Einsatz von Formkörpern und Extrudaten aus den erfindungsgemäßen Polymeren bei elektronischen Anwendungen, wie der Einsatz der Materialien bei Tastaturen ("keypads") und Gehäusen. Ein bevorzugter Einsatzbereich sind dabei Mobiltelefone, Computer und Digital-Kameras.

Die Formkörper, Extrudate und Folien und Folienlaminate aus den erfindungsgemäßen Polymerzusammensetzungen sind ebenfalls Gegenstand dieser Anmeldung, genauso wie Formteile, Extrudate und Folien enthaltend Coextrusionsschichten aus den erfindungsgemäßen Polymerzusammensetzungen.

Die nachfolgenden Beispiele sollen die Erfindung illustrieren ohne sie jedoch einzuschränken.

### Beispiele

Die Polycarbonate wurden mittels Glaspunkt Tg und der relativen Lösungsviskosität ηᵣₑₗ charakterisiert. Die Bestimmung der Tg erfolgte mittels Dynamische Differenz-Thermoanalyse (DSC) nach ISO 11357. Die relative Lösungsviskosität wurde in Methylenchlorid als Lösungsmittel bei einer Konzentration von 0,5 g/l und bei einer Temperatur von 25°C mit einem Ubbelohde-Viskosimeter bestimmt (DIN 51562).

Makrolon® M.3108 ist ein Polycarbonat auf Basis von Bisphenol A mit einem MVR von 6 cm³/10min bei 300°C/1,2 kg (Bayer MaterialScience).

Apec® 1895 ist ein Copolycarbonat auf Basis von Bisphenol A und Bisphenol TMC mit einem MVR von 18 cm³/10min bei 330°C/2,16 kg (Bayer MaterialScience).

### Beispiel 1

### Herstellung der Polycarbonat-Komponente B

Zu einer mit Stickstoff inertisierten Lösung von 153,81 g (0,6 mol) Dimethylbisphenol A (2,2-Bis-(3,5-dimehtyl-4-hydroxyphenyl)-propan) der Strukturformel (5), 3,24 g (0,0216 mol, 3,6 mol-% bzgl. Bisphenol) p-tert.-Butylphenol (BUP) als Kettenabbrecher und 55,2 g (1,38 mol) Natriumhydroxid in 1150 ml Wasser werden 1150 ml Methylenchlorid hinzugegeben. Bei einem pH-Wert von 12,5 ― 13,5 und 20 °C leitet man 64,5 g (0,9 mol) Phosgen ein. Um den pH-Wert nicht unter 12,5 fallen zu lassen, wurde während der Phosgenierung 30 %-ige Natronlauge zugegeben. Nach beendeter Phosgenierung und Spülung mit Stickstoff rührt man für weitere 5 Minuten und gibt dann 0,83 g (0,006 mol, 1 mol-% bzgl. Diphenole) N-Ethylpiperidin als Katalysator zu und lässt 1 Stunde nachrühren. Die organische Phase wird nach Abtrennen der wässrigen Phase mit Phosphorsäure angesäuert und 8-mal mit je 1000 ml destilliertem Wasser neutral und salzfrei gewaschen. Die organische Phase wird abgetrennt, über Natriumsulfat getrocknet und anschließend im Wasserstrahlvakuum bei 80°C eingeengt und schließlich bei 130°C im Wasserstrahlvakuum bis zur Massenkonstanz getrocknet.

### Man erhält transparentes Polycarbonat

### Beispiele 2 bis 7

### Compounds mit verbesserter Oberflächenhärte

### Die hergestellten Compounds sind in Tabelle 1 aufgeführt:

### Messung der Oberflächenhärte:

Die Polycarbonatzusammensetzungen werden über Nacht bei 120 °C im Trockenschrank vorgetrocknet. Die Polymere wurde anschließend in Methylenchlorid aufgelöst und in kleine Schälchen mit 5 cm Durchmesser gegossen. Das Lösungsmittel wurde abgedampft und der verbleibende Polymerkörper wiederum bei 120 °C im Vakuumtrockenschrank über Nacht. Man erhält nach dem Entfernen des Polymers aus dem Schälchen kreisrunde Probescheiben mit 5 cm Durchmesser und einer Dicke von ca. 1 - 1,5 mm.

Die Messung der Oberflächenhärte erfolgt an kleinen Plättchen mittels eines Atomic Force Microscops AFM (Digital Instruments Nanoscope), wobei unter Vorgabe der Eindruckkraft einer Diamantspitze in einem Nanoindent-Messkopf (Fa. Hysitron) in die Polymeroberfläche (80 µN), der Scangeschwindigkeit der Spitze (1 Hz) sowie der Messfeldgröße (30 x 30 µm; abgerastert in 256 Zeilen) das jeweils durch die Abrasterung mechanisch aus der Probenoberfläche entfernte Volumen (Vertiefung im Material) in µm³ als Messgröße und damit als Maßeinheit für die Oberflächenhärte erhalten wird. Je größer das Volumen dabei ist, desto weicher ist die Materialoberfläche des jeweiligen Copolycarbonates. Kleinere Volumenwerte indizieren somit eine verbesserte Oberflächenhärte. In Tabelle 2 sind Messwerte an erfindungsgemäßen Copolycarbonaten sowie am Vergleichsbeispiel aufgeführt.

Die erfindungsgemäßen Beispiele der Polycarbonatzusammensetzungen aus den Beispielen 2 bis 7 (s. Tabelle 1) weisen dabei signifikant niedrigere Volumenwerte der Vertiefung als die Vergleichsbeispiele eines reinen Copolycarbonates auf Basis von Bisphenol TMC und Bisphenol A bzw. eines Homopolycarbonates auf Bisphenol A-Basis auf. Die Polycarbonatzusammensetzungen haben somit eine verbesserte Oberflächenhärte, was für den Fachmann nicht zu erwarten gewesen ist. Tabelle 1:

| Zusammensetzung | Beispiel 2 | Beispiel 3 | Beispiel 4 | Beispiel 5 | Beispiel 6 | Beispiel 7 |
|---|---|---|---|---|---|---|
| Polycarbonat-Komponente A Apec® 1895 [%] | 40 | 45 | 50 | 55 | 60 | 70 |
| Polycarbonat-Komponente B aus Beispiel 1 [%] | 60 | 55 | 50 | 45 | 40 | 30 |
| Tg [°C] | 130 | 134 | 135 | 143 | 139 | 149 |
| ηᵣₑₗ | 1,242 | 1,235 | 1,241 | 1,240 | 1,238 | 1,243 |
| | | | | | | |
| Volumen der Vertiefung [µm³] | 35,1 | 36,2 | 37,7 | 38,0 | 37,9 | 58,1 |

| Polycarbonat | Vergleichsbeispiel I Copolycarbonat Apec® 1895 | Vergleichsbeispiel II Makrolon® M.3108 |
|---|---|---|
| Tg [°C] | 183 | 149 |
| ηᵣₑₗ | 1,235 | 1,31 |
| | | |
| Volumen der Vertiefung [µm³] | 92,0 | 113,0 |

## Patentansprüche

1. Polycarbonatzusammensetzungen enthaltend:
A) 10 ― 90 Gew.-Teile (bezogen auf die Summe der Gewichtsteile der Komponenten A+B) eines Polycarbonats enthaltend eine oder mehrere Monomereinheiten abgeleitet von Verbindungen der allgemeinen Formeln (1a), (1b) und (1c), 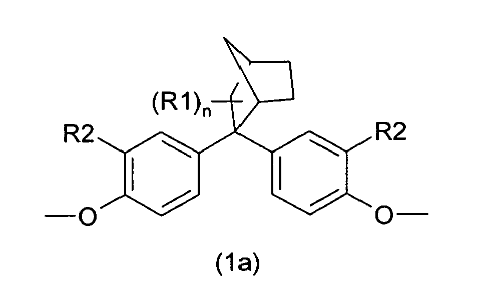 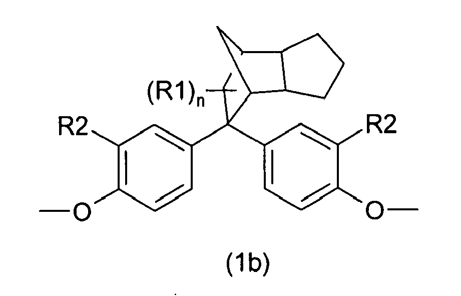 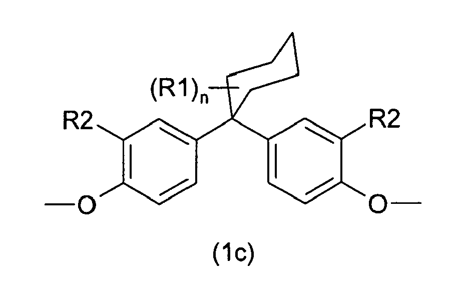 in welchen die R1 unabhängig voneinander für C₁-C₄-Alkyl,
n für 0, 1, 2 oder 3 für die Strukturen (1a) und (1b) bzw. n für 3, 4, 5 oder 6 für die Struktur ( 1 c),
und die R2 unabhängig voneinander für H, lineare oder verzweigte C₁-C₁₀ Alkyl.
B) 90 ― 10 Gew.-Teile (bezogen auf die Summe der Gewichtsteile der Komponenten A+B) eines Polycarbonats enthaltend eine oder mehrere Monomereinheiten abgeleitet von Verbindungen der allgemeinen Formel (4): 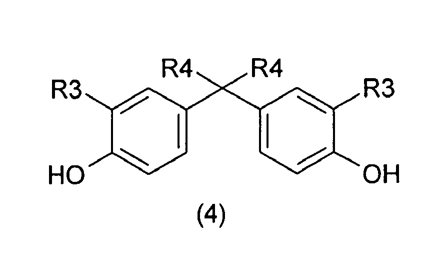 in denen R3 für H, lineare oder verzweigte C₁-C₁₀ Alkyl,
und
in denen R4 für lineare oder verzweigte C₁-C₁₀ Alkyl.

2. Polycarbonatzusammensetzung gemäß Anspruch 1, **dadurch gekennzeichnet, dass** die R2 und R3 unabhängig voneinander für H oder C₁-Alkyl (Methyl) steht.

3. Polycarbonatzusammensetzung gemäß einem der Ansprüche 1 oder 2, **dadurch gekennzeichnet, dass** wenigstens eine der Komponenten A oder B zusätzlich Diphenole der Formel (3a) enthält 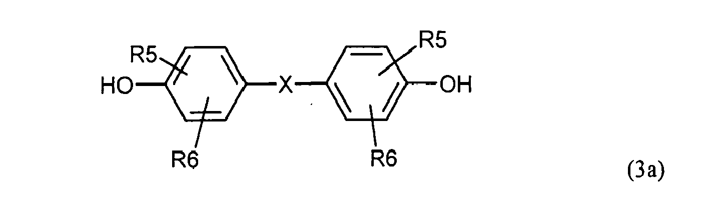 in welcher
R5 und R6 unabhängig voneinander für Wasserstoff, C₁-C₁₈-Alkyl-, C₁-C₁₈-Alkoxy, Halogen, jeweils gegebenenfalls substituiertes Aryl oder Aralkyl, stehen, und
X für eine Einfachbindung, -SO₂- -CO-, -O-, -S-, C₁- bis C₆-Alkylen, C₂- bis C₅-Alkyliden oder C₅- bis C₆- Cycloalkyliden, welches mit C₁- bis C₆-Alkyl substituiert sein kann, für C₆-C₁₂-Arylen, welches gegebenenfalls mit weiteren Heteroatome enthaltenden aromatischen Ringen kondensiert sein kann, steht.

4. Polycarbonatzusammensetzung gemäß einem der Ansprüche 1 bis 3, **dadurch gekennzeichnet, dass** die Zusammensetzung 20 ― 80 Gew.-Teile Komponente A und 80 ― 20 Gew.-Teile Komponente B (jeweils bezogen auf die Summe der Gewichtsteile der Komponenten A+B) enthält.

5. Polycarbonatzusammensetzung gemäß einem der Ansprüche 1 bis 3, **dadurch gekennzeichnet, dass** die Zusammensetzung 25 ― 65 Gew.-Teile Komponente A und 75 ― 35 Gew.-Teile Komponente B (jeweils bezogen auf die Summe der Gewichtsteile der Komponenten A+B) enthält.

6. Polycarbonatzusammensetzung gemäß einem der Ansprüche 1 bis 5, **dadurch gekennzeichnet, dass** die Komponente A eine oder mehrere Monomereinheiten abgeleitet von Verbindungen der allgemeinen Formeln (2d) bis (2i) enthält.

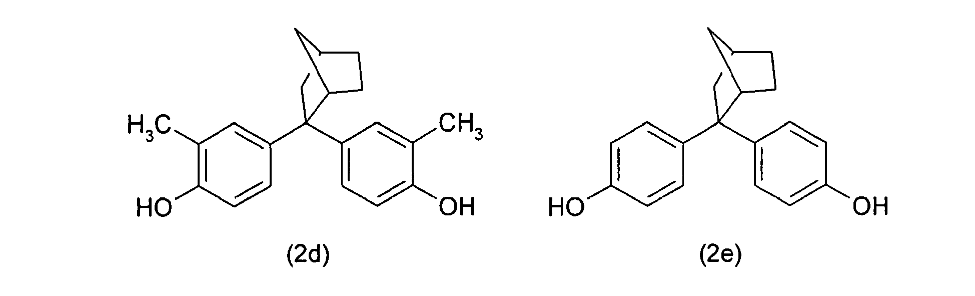

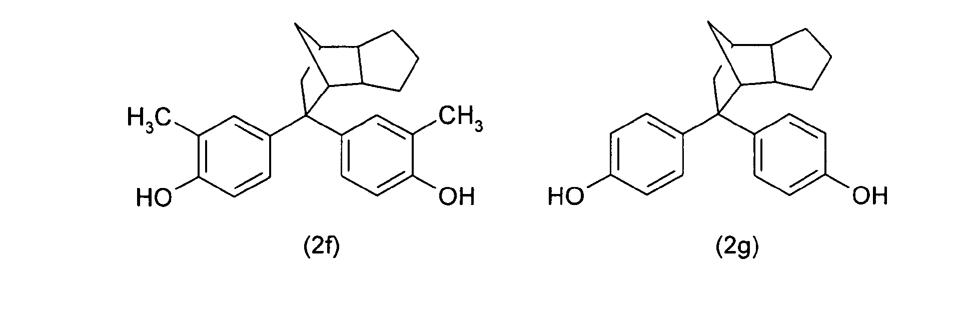

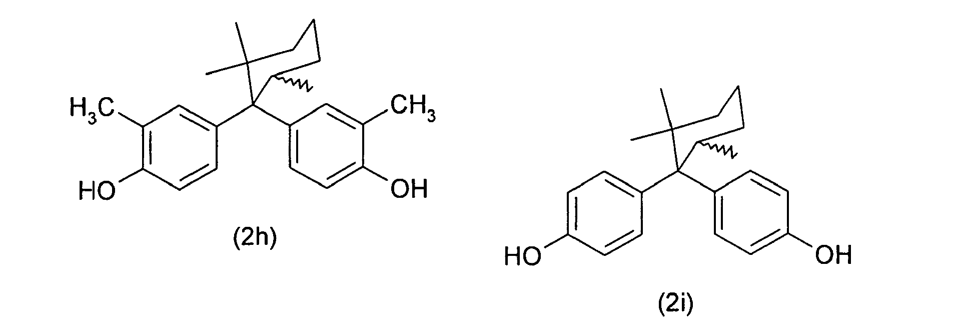

7. Polycarbonatzusammensetzung gemäß einem der Ansprüche 1 bis 6, **dadurch gekennzeichnet, dass** Komponente A die Monomereinheiten abgeleitet von Verbindungen der allgemeinen Formeln (3c) bis (3d) enthält.

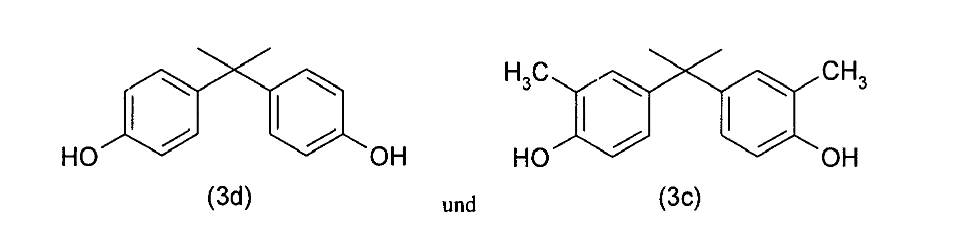

8. Polycarbonatzusammensetzung gemäß einem der Ansprüche 1 bis 7, **dadurch gekennzeichnet, dass** 0 bis 5 Gew.-Teile (bezogen auf die Summe der Gewichtsteile der Komponenten A+B) Zusatzstoffe in der Zusammensetzung enthalten sind.

9. Verwendung von Polycarbonatzusammensetzungen gemäß einem der Ansprüche 1 bis 8 zur Herstellung von Formteilen, Extrudaten, Folien, Folienlaminaten und Coextrusionsschichten.

10. Formteile, Extrudate, Folien und Folienlaminate, erhältlich aus Polycarbonatzusammensetzungen gemäß einem der Ansprüche 1 bis 8 sowie Formteile, Extrudate und Folien enthaltend Coextrusionsschichten erhältlich aus Copolycarbonaten gemäß Anspruch 1.

11. Tastaturen in Elektro- und Elektronikgeräten, Linsen, Bildschirm/Display-Abdeckungen und LED-Anwendungen gemäß Anspruch 10.

12. Verfahren zur Herstellung von Polycarbonatzusammensetzungen gemäß einem der Ansprüche 1 bis 8 durch Compoundierung aus Polycarbonaten nach dem Phasengrenzflächenverfahren oder Schmelzumesterungsverfahren, **dadurch gekennzeichnet, dass** eine oder mehrere Verbindungen ausgewählt aus Verbindungen der Formeln (1a), (1b) oder (1c) als Diphenole eingesetzt werden.
